# EUROPEAN PATENT SPECIFICATION

(11) **EP 2 471 674 B1**
(45) Date of publication and mention of the grant of the patent: **05.03.2014**
(21) Application number: 11172782.2
(22) Date of filing: 06.07.2011
(51) Int. Cl.: B60C 23/04

(54) **Apparatus and method for automatically recognizing position of wheel of vehicle**
Vorrichtung und Verfahren zur automatischen Erkennung der Position eines Fahrzeugreifens
Appareil et procédé pour reconnaître automatiquement la position d'une roue de véhicule

(30) Priority: 31.12.2010 KR 20100139972
(43) Date of publication of application: 04.07.2012
(73) Proprietor: Samsung Electro-Mechanics Co., Ltd, Suwon Gyunggi-do 443-743 (KR)
(72) Inventor: Song, Jong Hyeong, 443-706 Gyunggi-do (KR); Lee, Kyungno, 151-782 Seoul (KR); Han, Jong Woo, 137-796 Seoul (KR)
(74) Representative: Heine, Christian Klaus

(56) References cited:
- DE-A1- 10 144 360
- US-A1- 2005 150 284
- US-B1- 6 278 363

## Description

### BACKGROUND OF THE INVENTION

### 1. Technical Field

The present invention relates to an apparatus and a method for automatically recognizing a position of a wheel of a vehicle.

### 2. Description of the Related Art

Various techniques with respect to safety design and control of a vehicle are currently being developed. A tire pressure monitoring system (TPMS), as one of the technical configurations in accordance with this, is extensively used and applied in a function for automated position recognition of automatically distinguishing positions of vehicle wheels. The use and applied technique of the TPMS are being expanded. The TPMS can check which wheel has a pressure deviating from the normal pressure when the pressure of the tire deviates from a normal level.

An apparatus according to the preamble of claim 2 is known from US 6,278,363.

Many methods are being deduced in order to provide this automated position recognition function in the TPMS, and some of the methods are being applied to the TPMS.However, the methods according to the prior art have problems in that a high installation cost is required for good performance, and a low installation cost decreases an accuracy in recognizing positions of wheels with respect to the automated position recognition function.

More specially, according to one method of the prior art, the position of the wheel is judged by analyzing a signal transmitted from an LF transmitter installed near each vehicle wheel and an RF signal received from a TPMS sensor module in response to the transmitted signal.

The above method has an advantage in that the position of the wheel can be discovered very accurately. However, the above method has a trouble of connecting a signal line to a point closer to each wheel and installing the LF transmitter and a disadvantage of requiring a high installation cost of the system.

According to another method of the prior art, left and right positions of the wheels are judged by installing 2-axis acceleration sensors for recognizing rotational directions of the wheels to recognize the rotational directions of the wheels, and combining values related to traveling directions (forward and backward) of the vehicle with the recognized rotational directions. That is, when the vehicle travels forward, the wheel is recognized as a right wheel if the wheel rotates clockwise, and the wheel is recognized as a left wheel if the wheel rotates counterclockwise.

In addition, a method of using 2-axis acceleration sensors or geomagnetic sensors is suggested in recognizing the rotational directions of the wheels in order to distinguish the left wheel and the right wheel. However, the above method is the same as the above method in that front and rear wheels are distinguished by the strength of RF signals.

In addition, the front and rear wheels are distinguished by the strength of the FR signals that are transmitted from general TPMS sensor modules to ECUs. For example, when the ECU is installed at a front bump of the vehicle, the corresponding wheel is judged as a front wheel if the strength of the RF signal is strong, but the corresponding wheel is judged as a rear wheel if the strength of the RF signal is weak.

However, the method of distinguishing the front and rear wheels by the strength of the RF signals has a problem in that the ECUs are installed at limited positions. More specially, a general vehicle is made of metallic materials, and the RF signal is distorted by the metallic materials of this vehicle. When the ECUs are not installed at the front and rear bumps of the vehicle, but at other positions, accuracy in distinguishing the front and rear wheels by the strength of the RF signals is decreased due to the distortion of the RF signals by the body of the vehicle. In other words, limiting the installation positions of the ECUs to the front and rear bumps means that the installation cost of the system is increased. Furthermore, since the front and rear bumps are at the positions where they are impacted more frequently than other parts of the body of the vehicle, the ECUs are likely to be broken frequently.

Another method is that the positions of the wheels are judged by using a relation between ABS data and a pressure of the wheel measured from the TPMS censure module. More specially, the wheel is pressed further due to weight of the vehicle as the pressure of the wheel becomes lower. When the vehicle travels in this state, the number of rotation of the wheel is more, compared with other wheels having normal wheel pressures. The number of rotation is measured and analyzed by the ABS data. The above method comes less expensive by utilizing an ABS generally installed in the vehicle and using a value from a pressure sensors basically installed at each TPMS. However, this method has a problem in that the position of the wheel cannot be judged when the pressure of the front, rear, left, or right wheel is changed while moving.

As a result, the method of automatically recognizing the position of the vehicle wheel according to the prior art requires more installation cost of the system due to the limitation according to installation position of the ECU, or causes a problem of reliability. Furthermore, the above method has technical difficulty, reliability deterioration, or deterioration in judging reliability caused by installing LF transmitters near respective wheels.

### SUMMARY OF THE INVENTION

The present invention has been made in an effort to provide an apparatus and a method for automatically recognizing a position of a wheel of a vehicle capable of automatically recognizing the position of the wheel of the vehicle, that is, a front, rear, left, or right wheel of the vehicle even without an increase in cost and a deterioration in judging reliability.

This object is accomplished by an apparatus and a method as set out in the appended claims.

### BRIEF DESCRIPTION OF THE DRAWINGS

FIG. 1 is a schematic constitutional diagram for estimating a variation in pressure of a tire according to acceleration and deceleration at the traveling time of a vehicle;
FIG. 2 is a schematic view illustrating the use of a vehicle having an apparatus for automatically recognizing a position of a wheel of a vehicle according to a preferred embodiment of the present invention; and
FIG. 3 is a schematic constitutional view of an apparatus for automatically recognizing a position of a wheel of a vehicle according to a preferred embodiment of the present invention.

### DESCRIPTION OF THE PREFERRED EMBODIMENTS

Various objects, advantages and features of the invention will become apparent from the following description of embodiments with reference to the accompanying drawings.

The terms and words used in the present specification and claims should not be interpreted as being limited to typical meanings or dictionary definitions, but should be interpreted as having meanings and concepts relevant to the technical scope of the present invention based on the rule according to which an inventor can appropriately define the concept of the term to describe most appropriately the best method he or she knows for carrying out the invention.

The above and other objects, features and advantages of the present invention will be more clearly understood from the following detailed description taken in conjunction with the accompanying drawings. In the specification, in adding reference numerals to components throughout the drawings, it is to be noted that like reference numerals designate like components even though components are shown in different drawings. Further, when it is determined that the detailed description of the known art related to the present invention may obscure the gist of the present invention, the detailed description thereof will be omitted.

Hereinafter, preferred embodiments according to the present invention will be described in detail with reference to the accompanying drawings.

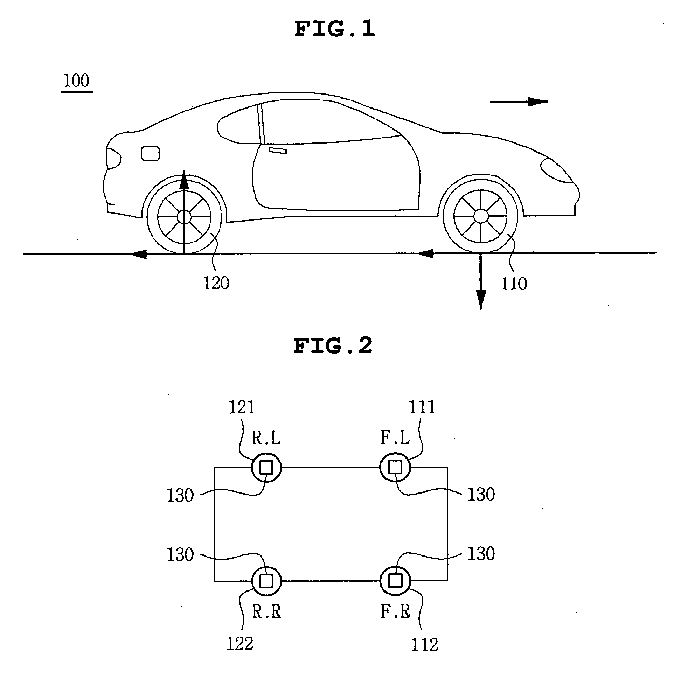

FIG. 1 is a schematic constitutional diagram for estimating a variation in pressure of a wheel according to acceleration or deceleration at the traveling time of a vehicle. In an apparatus and a method for automatically recognizing the position of wheels of a vehicle according to the present invention, signals from rotation sensors connected to the wheels and signals from pressure sensors connected to wheels are analyzed to distinguish a front wheel from a rear wheel of the vehicle.

More specially, when the vehicle travels at a constant speed, data with respect to variation in rotation by the rotation sensors connected to the wheels of the vehicle and data with respect to tire pressure have constant values, respectively. That is, a value of a variation in rotation, dw/dt, by the rotation sensor will have the negative (-) sign if the vehicle brakes while traveling forward. At this time, a variation in pressure of the tire varies according to the front wheel or the rear wheel. When the vehicle slows down, the front wheel 110 applies a pressure in the arrow directions, as shown in the figure. Therefore, a rate of variation in pressure, dp/dt, of the wheel of the front wheel 110 has the positive (+) sign, and a rate of variation in pressure, dp/dt, of the wheel of the rear wheel 120 has the negative (-) sign.

This occurs due to a torque by a distance between the center of mass of the vehicle as a rigid body and the wheel to be braked.

FIG. 2 is a schematic view for illustrating the use of a vehicle having an apparatus for automatically recognizing a position of a wheel of a vehicle according to a preferred embodiment of the present invention. As shown in the figure, the apparatus for automatically recognizing a position of a wheel of a vehicle according to the present invention is realized by TPMS sensor modules 130, which are respectively installed at a light front wheel 112, a left front wheel 111, a light rear wheel 122, and a left rear wheel 121, of the vehicle to sense variations in rotation, rotational directions, and variations in pressure of the respective wheels.

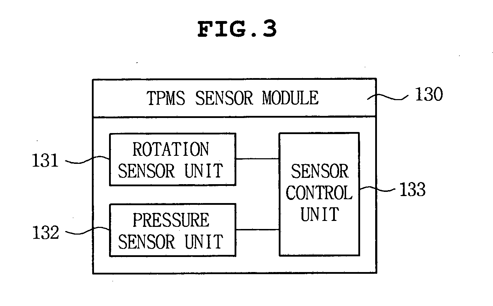

FIG. 3 is a schematic constitutional view of an apparatus for automatically recognizing a position of a wheel of a vehicle according to a preferred embodiment of the present invention. As shown in the figure, a TPMS sensor module 130 of the apparatus for automatically recognizing a position of a wheel of a vehicle includes a rotation sensor unit 131, a pressure sensor unit 132, and a sensor control unit 133.

More specially, the rotation sensor unit 131, which is for sensing a rotational direction and a variation in rotation of the wheel of the vehicle, may use a gyro sensor, a 2-axis acceleration sensor, an angular velocity sensor, and so on. The pressure sensor unit 132 is for sensing a rate of variation in pressure the wheel of the vehicle. The sensor control unit 133 determines whether the wheel of the vehicle is positioned on the left, right, front, or rear through the variation in rotation, the rotational direction, and the rate of variation in pressure obtained from the rotation sensor unit and the pressure sensor unit.

Hereafter, a method as to how to judge the position of the wheel of the vehicle through the variation in rotation and the rate of variation in pressure will be described in detail.

Generally, when the vehicle is accelerated/decelerated at the time of traveling, a value from the rotation sensor installed inside the TPMS sensor module and the pressure of the tire are simultaneously changed. The position of the wheel of the vehicle is judged by analyzing the variation in rotation and the rate of variation in pressure, of the wheel of the vehicle.

More specially, as described with reference to FIG. 1, when the vehicle is decelerated while traveling at a constant speed, the rate of variation in pressure dp/dt of the tire of the front wheel 110 has the positive (+) sign and the rate of variation in pressure dp/dt of the tire of the rear wheel 120 has the negative (-) sign. The variations in rotation dw/dt of the front wheel and the rear wheel all have the same negative (-) sign.

Therefore, when the vehicle is decelerated, if the product of the variation in rotation dw/dt and the rate of variation in pressure dp/dt, that is, a value of dw/dt x dp/dt, has the negative (-) sign, the corresponding wheel is judged to be a front wheel, and if a value of dw/dt x dp/dt has the positive (+) sign, the corresponding wheel is judged to be a rear wheel.

On the contrary, when the vehicle is accelerated due to increase of speed, the variation in rotation dw/dt of the wheel of the vehicle obtained from the rotation sensor unit 131 has the positive (+) sign in all of the front wheel and the rear wheel equally. At this time, the rate of variation in pressure dp/dt of the tire of the vehicle obtained from the pressure sensor unit 132, on the contrary to when the vehicle is decelerated, has the negative (-) sign in the front wheel and the positive (+) sign in the rear wheel.

Therefore, when the vehicle is accelerated, if the product of the variation in rotation dw/dt and the rate of variation in pressure dp/dt, that is, a value of dw/dt x dp/dt, has the negative (-) sign, the corresponding wheel is judged to be a front wheel, and if a value of dw/dt x dp/dt has the positive (+) sign, the corresponding wheel is judged to be a rear wheel.

The rotation sensor unit 131 according to the present invention is capable of judging the left wheel or the right wheel by sensing the rotational direction, that is, clockwise rotation and counterclockwise rotation. That is, when the vehicle travels forward, the right wheel is recognized if the wheel rotates clockwise, and the left wheel is recognized if the wheel rotates counterclockwise.

Therefore, the present invention is capable of automatically recognizing the position of the wheel of the vehicle, for example, judging whether the wheel is a front wheel or a rear wheel, regardless of acceleration and deceleration of the vehicle, through the product of the variation in rotation dw/dt and the rate of variation in pressure dp/dt, that is, a value of dw/dt x dp/dt, and judging whether the wheel is a left wheel or a right wheel by the rotational direction sensed by the rotation sensor unit. As a result, it is possible to automatically recognize ally the position of the wheel of the vehicle, that is, front, rear, left, and right wheels of the vehicle.

The method for automatically recognizing a position of a wheel of a vehicle according to the present invention includes: sensing a variation in rotation and a rational direction of the wheel of the vehicle; sensing a rate of variation in pressure of the wheel of the vehicle; and judging whether the wheel is a left wheel or a right wheel by the rotational direction obtained from a rotation sensor unit, and judging whether the wheel is a front wheel or a rear wheel by using a product value of the variation in rotation and the rate of variation in pressure of the wheel of the vehicle respectively sensed from the rotation sensor unit and the pressure sensor unit.

The judging whether the wheel is a front wheel or a rear wheel may be performed by judging the wheel as the front wheel when a value of dw/dt x dp/dt has a negative (-) sign and judging the wheel as the rear wheel when the value of dw/dt x dp/dt has a positive (+) sign, in which dw/dt is the variation in rotation and dp/dt is the rate of variation in pressure.

According to the above-description, an apparatus and a method for automatically recognizing a position of a wheel of a vehicle - that is, whether the wheel is a left wheel, a right wheel, a front wheel, or a rear wheel, without the increase in costs and the deterioration in the reliability of judging.

The present invention includes a rotation sensor unit sensing a variation in rotation and a rotational direction of the wheel of the vehicle and a pressure sensor unit sensing a rate of variation in pressure of the wheel of the vehicle. The present invention has an effect of providing an apparatus and a method for automatically recognizing a position of a wheel of a vehicle capable of automatically recognizing the position of the wheel of the vehicle, that is, front, rear, left, and right wheels of the vehicle even without an increase in cost and a deterioration in judging reliability, by judging the position of the wheel of the vehicle through a variation in rotation and a rate of variation in pressure.

## Claims

1. An apparatus for automatically recognizing a position of a wheel of a vehicle, the apparatus comprising:
a rotation sensor unit (131) sensing a variation in rotation of the wheel of the vehicle;
a pressure sensor unit (132) sensing a rate of variation in pressure of the wheel of the vehicle; and
a sensor control unit (133) judging the position of the wheel of the vehicle by the variation in rotation and the rate of variation in pressure obtained from the rotation sensor unit and the pressure sensor unit, which are respectively installed at a right front wheel (112), a left front wheel (111), a right rear wheel (122), and a left rear wheel (121), of the vehicle, **characterised in that**
the sensor control unit judges the position of the wheel of the vehicle by dw/dt × dp/dt, in which dw/dt is the variation in rotation and dp/dt is the rate of variation in pressure, and
the wheel is judged as a front wheel when a value of dw/dt × dp/dt has a negative (-) sign, and the wheel is judged as a rear wheel when the value of dw/dt × dp/dt has a positive (+) sign.

2. An apparatus for automatically recognizing a position of a wheel of a vehicle, the apparatus comprising:
a rotation sensor unit (131) sensing a variation in rotation and a rotational direction of the wheel of the vehicle;
a pressure sensor unit (132) sensing a rate of variation in pressure of the wheel of the vehicle; and
a sensor control unit (133) judging whether the wheel is a left wheel or a right wheel by the rotational direction obtained from the rotation sensor unit, and judging whether the wheel is a front wheel or a rear wheel by the variation in rotation and the variation in pressure of the wheel of the vehicle obtained from the rotation sensor unit and the pressure sensor unit, which are respectively installed at a right front wheel (112), a left front wheel (111), a right rear wheel (122), and a left rear wheel (121), of the vehicle, **characterised in that**
the judging whether the wheel is the front wheel or the rear wheel is performed by judging the wheel as the front wheel when a value of dw/dt × dp/dt has a negative (-) sign and judging the wheel as the rear wheel when the value of dw/dt × dp/dt has a positive (+) sign, in which dw/dt is the variation in rotation and dp/dt is the rate of variation in pressure.

3. A method for automatically recognizing a position of a wheel of a vehicle, the method comprising:
sensing a variation in rotation and a rotational direction of the wheel of the vehicle;
sensing a rate of variation in pressure of the wheel of the vehicle; and
judging whether the wheel is a left wheel or a right wheel by the rotational direction obtained from a rotation sensor unit, and being **characterised by** judging whether the wheel is a front wheel or a rear wheel by using a product value of the variation in rotation and the variation in pressure of the wheel of the vehicle obtained from the rotation sensor unit and the pressure sensor unit.

4. The method as set forth in claim 3, wherein the judging whether the wheel is the front wheel or the rear wheel is performed by judging the wheel as the front wheel when a value of dw/dt × dp/dt has a negative (-) sign and judging the wheel as the rear wheel when the value of dw/dt × dp/dt has a positive (+) sign, in which dw/dt is the variation in rotation and dp/dt is the rate of variation in pressure.

## Patentansprüche

1. Vorrichtung zur automatischen Erkennung einer Position eines Rades eines Fahrzeugs, wobei die Vorrichtung aufweist:
eine Rotationssensoreinheit (131), welche eine Rotationsänderung des Rades des Fahrzeugs erfasst;
eine Drucksensoreinheit (132), welche eine Druckänderungsrate des Rades des Fahrzeugs erfasst; und
eine Sensorsteuereinheit (133), welche die Position des Rades des Fahrzeugs anhand der Rotationsänderung und der Druckänderungsrate beurteilt, die von der Rotationssensoreinheit und der Drucksensoreinheit erhalten werden, welche an einem rechten Vorderrad (112), einem linken Vorderrad (111), einem rechten Hinterrad (122) bzw. einem linken Hinterrad (121) des Fahrzeugs installiert sind, **dadurch gekennzeichnet, dass**
die Sensorsteuereinheit die Position des Rades des Fahrzeugs anhand von dw/dt × dp/dt beurteilt, wobei dw/dt die Rotationsänderung ist und dp/dt die Druckänderungsrate ist, und
das Rad als ein Vorderrad beurteilt wird, wenn ein Wert von dw/dt × dp/dt ein negatives (-) Vorzeichen hat, und das Rad als ein Hinterrad beurteilt wird, wenn der Wert von dw/dt × dp/dt ein positives (+) Vorzeichen hat.

2. Vorrichtung zur automatischen Erkennung einer Position eines Rades eines Fahrzeugs, wobei die Vorrichtung aufweist:
eine Rotationssensoreinheit (131), welche eine Rotationsänderung und eine Rotationsrichtung des Rades des Fahrzeugs erfasst;
eine Drucksensoreinheit (132), welche eine Druckänderungsrate des Rades des Fahrzeugs erfasst; und
eine Sensorsteuereinheit (133), welche anhand der von der Rotationssensoreinheit erhaltenen Rotationsrichtung beurteilt, ob das Rad ein linkes Rad oder ein rechtes Rad ist, und anhand der Rotationsänderung und der Druckänderung des Rades des Fahrzeugs,
die von der Rotationssensoreinheit und der Drucksensoreinheit erhalten werden, welche an einem rechten Vorderrad (112), einem linken Vorderrad (111), einem rechten Hinterrad (122) bzw. einem linken Hinterrad (121) des Fahrzeugs installiert sind, beurteilt, ob das Rad ein Vorderrad oder ein Hinterrad ist,
**dadurch gekennzeichnet, dass**
das Beurteilen, ob das Rad das Vorderrad oder das Hinterrad ist, durchgeführt wird, indem das Rad als das Vorderrad beurteilt wird, wenn ein Wert von dw/dt × dp/dt ein negatives (-) Vorzeichen hat, und das Rad als das Hinterrad beurteilt wird, wenn der Wert von dw/dt × dp/dt ein positives (+) Vorzeichen hat, wobei dw/dt die Rotationsänderung ist und dp/dt die Druckänderungsrate ist.

3. Verfahren zur automatischen Erkennung einer Position eines Rades eines Fahrzeugs, wobei das Verfahren aufweist:
Erfassen einer Rotationsänderung und einer Rotationsrichtung des Rades des Fahrzeugs;
Erfassen einer Druckänderungsrate des Rades des Fahrzeugs; und
Beurteilen, anhand der von einer Rotationssensoreinheit erhaltenen Rotationsrichtung, ob das Rad ein linkes Rad oder ein rechtes Rad ist, und
**gekennzeichnet ist durch**
Beurteilen, **durch** Verwendung eines Produktwertes der Rotationsänderung und der Druckänderung des Rades des Fahrzeugs, die von der Rotationssensoreinheit und der Drucksensoreinheit erhalten werden, ob das Rad ein Vorderrad oder ein Hinterrad ist.

4. Verfahren nach Anspruch 3, wobei das Beurteilen, ob das Rad das Vorderrad oder das Hinterrad ist, durchgeführt wird, indem das Rad als das Vorderrad beurteilt wird, wenn ein Wert von dw/dt × dp/dt ein negatives (-) Vorzeichen hat, und das Rad als das Hinterrad beurteilt wird, wenn der Wert von dw/dt × dp/dt ein positives (+) Vorzeichen hat, wobei dw/dt die Rotationsänderung ist und dp/dt die Druckänderungsrate ist.

## Revendications

1. Appareil pour reconnaître automatiquement la position d'une roue de véhicule, l'appareil comportant :
une unité (131) de capteur de rotation détectant une variation de rotation de la roue du véhicule ;
une unité (132) de capteur de pression détectant une vitesse de variation de pression de la roue du véhicule ; et
une unité (133) de commande de capteurs jugeant la position de la roue du véhicule par la variation de rotation et la vitesse de variation de pression obtenues à partir de l'unité de capteur de rotation et de l'unité de capteur de pression, qui sont respectivement installées au niveau d'une roue avant droite (112), d'une roue avant gauche (111), d'une roue arrière droite (122) et d'une roue arrière gauche (121) du véhicule, **caractérisé en ce que**
l'unité de commande de capteurs juge la position de la roue du véhicule par dw/dt × dp/dt, où dw/dt est la variation de rotation et dp/dt est la vitesse de variation de pression, et
**en ce que** la roue est jugée être une roue avant lorsqu'une valeur de dw/dt × dp/dt est de signe négatif (-), et la roue est jugée être une roue arrière lorsque la valeur de dw/dt × dp/dt est de signe positif (+).

2. Appareil pour reconnaître automatiquement la position d'une roue de véhicule, l'appareil comportant :
une unité (131) de capteur de rotation détectant une variation de rotation et un sens de rotation de la roue du véhicule ;
une unité (132) de capteur de pression détectant une vitesse de variation de pression de la roue du véhicule ; et
une unité (133) de commande de capteurs jugeant si la roue est une roue gauche ou une roue droite par le sens de rotation obtenu à partir de l'unité de capteur de rotation, et jugeant si la roue est une roue avant ou une roue arrière par la variation de rotation et la variation de pression de la roue du véhicule obtenues à partir de l'unité de capteur de rotation et de l'unité de capteur de pression, qui sont respectivement installées au niveau d'une roue avant droite (112), d'une roue avant gauche (111), d'une roue arrière droite (122) et d'une roue arrière gauche (121) du véhicule, **caractérisé en ce que** l'action de juger si la roue est la roue avant ou la roue arrière est effectuée en jugeant que la roue est la roue avant lorsqu'une valeur de dw/dt × dp/dt est de signe négatif (-) et en jugeant que la roue est la roue arrière lorsque la valeur de dw/dt × dp/dt est de signe positif (+), où dw/dt est la variation de rotation et dp/dt est la vitesse de variation de pression.

3. Procédé pour reconnaître automatiquement la position d'une roue de véhicule, le procédé comportant les étapes consistant à :
détecter une variation de rotation et un sens de rotation de la roue du véhicule ;
détecter une vitesse de variation de pression de la roue du véhicule ; et
juger si la roue est une roue gauche ou une roue droite par le sens de rotation obtenu à partir d'une unité de capteur de rotation, et étant **caractérisé par** l'action de juger si la roue est une roue avant ou une roue arrière en utilisant une valeur du produit de la variation de rotation et de la variation de pression de la roue du véhicule obtenues à partir de l'unité de capteur de rotation et de l'unité de capteur de pression.

4. Procédé selon la revendication 3, l'action de juger si la roue est la roue avant ou la roue arrière étant effectuée en jugeant que la roue est la roue avant lorsqu'une valeur de dw/dt × dp/dt est de signe négatif (-) et en jugeant que la roue est la roue arrière lorsque la valeur de dw/dt × dp/dt est de signe positif (+), où dw/dt est la variation de rotation et dp/dt est la vitesse de variation de pression.
